# EUROPEAN PATENT APPLICATION

(11) **EP 3 575 278 A1**
(43) Date of publication of application: **04.12.2019**
(21) Application number: 18175405.2
(22) Date of filing: 31.05.2018
(51) Int. Cl.: C05G 3/08, A01N 57/28, A01N 47/44, A01P 15/00

(54) **LIQUID NITROGEN FERTILIZER COMPOSITIONS AND ADDITIVES THEREFOR**

(71) Applicant: Tessenderlo Kerley, Inc., Phoenix, AZ 85008-3279 (US)
(72) Inventor: HOJJATIE, Michael Massoud, Phoenix, AZ Arizona 85008 (US); Fairweather, Thomas David, Phoenix, AZ Arizona 85008 (US)
(74) Representative: Hoyng Rokh Monegier LLP

(57) **Abstract**

The present invention relates to additive solutions of at least one urease inhibitor and/or at least one nitrification inhibitor, wherein the solution comprises: urea, an urea-aldehyde adduct and/or an urea-triazone fertilizer, water and at least one co-solvent, and further at least about 1 wt%, preferably at least about 2 wt% of urease and/or nitrification inhibitors.

Up to about 30 wt% and more of the inhibitors could be dissolved as such. Additive solutions of the invention are highly suitable for the adding to liquid N and/or S fertilizers. A liquid 28-0-0-5S fertilizer can for instance be made from materials of the invention.

## Description

The present invention is related to liquid nitrogen fertilizer compositions, and a method for producing such fertilizer compositions. The present invention furthermore relates to additives for liquid nitrogen fertilizer compositions, and to nitrogen fertilizer compositions with urease and/or nitrification inhibitors.

### BACKGROUND OF THE INVENTION

Urea is a white crystalline solid containing about 46% nitrogen that is widely used in the agricultural industry as a nitrogen fertilizer. World urea consumption is estimated to have exceeded 160 million tons in 2014-2016. Commercially, urea fertilizer can be purchased as prills or as a granulated material. Urea can be applied to soil as a solid or as an aqueous solution. Aqueous urea solution also can be applied to certain crops as a foliar spray. Urea's high nitrogen content (∼46%) helps reduce handling, storage and transportation costs over other dry nitrogen forms. Urea, when properly applied, results in crop yield increases equal to other forms of nitrogen fertilizer.

The stability of urea today is receiving greater attention due to a major increase in no-tillage or minimum-tillage crop production. In no- or minimum-tillage crop production, fertilizer materials are placed on the soil surface, as opposed to placement in the soil for conventional seedbed operations. Also, improved stability of urea has major nitrogen efficiency implications for the turf industry, where fertilizer products are placed on the soil and turf surface.

Nitrogen from urea can be lost to the atmosphere if urea fertilizer remains on the soil surface for extended periods of time during warm weather. Urea breakdown can begin as soon as it is applied to the soil. Typically, urea does not break down if the soil is totally dry. However, in the presence of the enzyme urease and a small amount of soil moisture, urea normally hydrolyzes to ammonia and carbon dioxide. This can occur in 2 to 4 days; more quickly on high pH soils and at higher temperatures.

Urease is a nickel-dependent metallo-enzyme, which catalyzes the hydrolysis of urea to ammonia and carbamate. The carbamate then spontaneously hydrolyzes to form carbonic acid and a second molecule of ammonia. At physiological pH, the carbonic acid proton dissociates and the ammonia molecules equilibrate with water, becoming protonated and resulting in a net increase in pH.

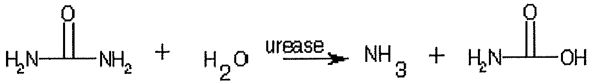

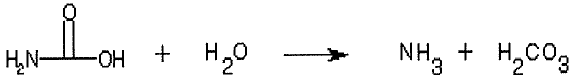

The rate of catalyzed hydrolysis is 10¹⁴ times the rate of the uncatalyzed reaction. Nickel-dependent ureases are found in a wide array of different organisms; many have been isolated from various bacteria, fungi, and higher plants.

When urea hydrolysis takes place on the soil surface, NH₃ can escape into the atmosphere. Such escape into the atmosphere is called ammonia volatilization. This type of nitrogen fertilizer loss does not occur if urea or urea-containing materials are placed below the soil surface, as in typical seed bed operations. Direct placement of urea below the soil surface is the most secure way to prevent nitrogen loss by way of ammonia volatilization. Nitrogen losses also are minimized if rainfall occurs soon after a surface application or if overhead irrigation water is applied.

When placed in the soil environment, ammonia further undergoes the following reaction:

NH₃ + H₂O ↔ NH₄⁺ + OH⁻

Many crops prefer nitrate rather than ammonium. Once an ammonium ion is formed, volatilization losses are not a factor and the nitrogen can be utilized for crop growth directly or be converted to nitrate-nitrogen by soil microorganisms. This conversion occurs rapidly in the presence of bacteria and may lead to an excess of nitrate-nitrogen in the soil environment. In order to prevent this rapid conversion, nitrification inhibitors have been developed to inhibit bacterial activity. For example, *Nitrosomonas* bacteria in the soil transform ammonia into nitrite anion (NO₂⁻) that in turn is oxidized to form a nitrate (NO₃⁻) anion by *Nitrobacter* and *Nitrosolobus* bacteria, as follows:

2NH₄⁺ + 3O₂ → 2NO₃⁻ + 8H⁺

The nitrification rate is most rapid in soils with pH values between 7 and 8, and decreases with decreasing pH values.

Leaching of nitrate into groundwater has drawn the attention of public health officials. Therefore, reduction of the nitrification rate is desirable. Nitrification of ammonia to nitrate introduces nitrate into the soil, from which the nitrate then leaches into vicinal groundwater.

Several urea containing liquid fertilizers exist, like for example UAN, triazone-urea mixtures (like N-sure) and urea-aldehyde adducts. Liquid fertilizer solutions and fluid fertilizers are popular in many areas because they are safe to handle, convenient to mix with other nutrients and chemicals and are easily applied. A solution of urea [CO(NH₂)₂] and ammonium nitrate [NH4NO3] (UAN) containing between 28 and 32 percent nitrogen (N) is one of the most popular liquid N fertilizers. It is frequently used with other fertilizers, including ammonium thiosulfate. Such solutions of UAN are widely used as a source of N for plant nutrition. The NO₃⁻ portion (25 percent of the total N) is immediately available for plant uptake. The NH₄⁺ fraction (25 percent of the total N) can also be assimilated directly by most plants, but is rapidly oxidized by soil bacteria to form NO₃⁻ (nitrate). Soil enzymes hydrolyze the remaining urea portion (approximately 50 percent of the total N but can vary between as little as 10% to as much as 90% urea- nitrogen depending on the manufacturer) to form NH₄⁺, which subsequently transforms to NO₃⁻ in most soil conditions.

Many different ways have been proposed to combat extensive nitrogen loss to the atmosphere and/or nitrification.

For instance, several types of slow release fertilizers have been introduced onto the market. Chemical reaction of urea with aldehydes, including formaldehyde as liquid (formalin), and as partially condensed with urea (UFC, UF 85), making UF fertilizers, and with acetaldehyde making urea-crotonaldehyde (CDU), or with isobutylidene aldehyde making isobutylidene diurea fertilizers (IBDU) have been employed for the chemical protection of urea providing slow release nitrogen (SRN) fertilizers. The foregoing are examples of fertilizers produced by the reaction of urea with aldehydes. Products from the reaction of urea with aldehydes are also known as urea-aldehyde adducts.

Physical barriers such as sulfur coating, polymer coating, and sulfur polymer coating have been applied to urea forming sulfur coated urea (SCU), polymer coated urea (PCU), and sulfur/polymer coated urea (PSCU) in order to slow down the hydrolyses of surface applied urea fertilizers.

A device for a slow-release fertilizers based on ammonium for low nitrate plant feeding comprising a hollow body with an opening is described in EP356755. The hollow body is filled with the ammonium fertilizer. EP476550 describes a soil additive ball for the nitrate-free supply of nitrogen to plants consisting of gypsum to slow down volatilization of urea.

Polymer coatings for controlled fertilizer release are described in EP357687, WO89/003811, WO97/004819, US6262183 and US5435821. Sulfur coated urea fertilizers are described in WO02/090294. Use of coating, binding and sealant materials such as Palm Oil for urea fertilizers are described in GB2164640.

Furthermore, a number of additives have been described, that are aimed at reducing the conversion from urea to ammonia (urease inhibitor) and/or to reduce the oxidation from ammonia to nitrate (nitrification inhibitor). Thus, urease inhibitors prevent or depress the transformation of amide nitrogen in urea to ammonia. They slow down the rate of hydrolysis of urea and reduce the volatilization of ammonia. Nitrification inhibitors delay the oxidation of ammonium by depressing the activity of the soil bacteria responsible for nitrification.

Numerous products have been promoted as nitrification inhibitors and urease inhibitors. For example, agents for improving the nitrogen utilization of mineral and/or organic fertilizers that contain urea are described in EP1183220. These agents comprised alkyl, aryl, and aralkylamino compounds. Urea fertilizers containing urease inhibitors comprising metal nitrate are described in GB2285803.

Similarly, many compounds, including organic compounds, inorganic materials, metal ions, organophosphorus compounds, and agriculture chemicals, have been tested as soil urease inhibitors (Bock, B. R. and D. E. Kissel, Ammonia Volatilization from Urea Fertilizers. Bulletin Y-206, National Fertilizer Development Center, TVA, Muscle Shoals, AL. 1988). For example, urease inhibition in urea based fertilizers by phosphorus compounds is described in EP119494, EP119495, EP119487, WO02/083697, WO00/058317, WO97/022568, US569800, US4824783, US5883297, US5883297, US5698003, US4618691, US4540428, US4539037, US4537614, US4530714, US4518413, US4517007, US4517004, US4517003, US4517,002, US4932992, US4932992 and US4242325.

Urease and nitrification inhibition of nitrogenous fertilizers with castor oil and oil derived from plants is described in US6315807 and US4932991. Use of heterocyclic compounds as urease inhibitors is described in US4932991 and US4954156. Organo Boranes or their derivatives are used as an antagonistic inhibitor to urease with urea fertilizers in US4462819.

A commercially successful urease inhibitor preferably is (1) environmentally and toxicologically safe under a reasonable set of handling conditions, (2) non-phytotoxic, (3) highly active and specific for the urease enzyme, (4) cost effective, (5) nonvolatile and compatible with a wide range of fertilizer materials, and (6) has mobility similar to that of urea.

N-(n-butyl)-thiophosphoric triamide (NBPT) is a well-known example of urease inhibitors. NBPT is commercially available under the trademark Agrotain® available from Agrotain International, St. Louis, MO (Koch).

Dicyandiamide (DCD) and 2-chloro-6-(trichloromethyl)-pyridine (nitrapyrin) are two examples of well-known nitrification inhibitors. Also well-known is 3, 4-dimethylpyrazolphosphate (DMPP).

It is prudent to stabilize the urea content of UAN by nitrogen stabilizers such as NBPT, DCD or both.

Yet, NBPT and DCD are organic compounds and not freely soluble in aqueous inorganic fertilizers. Several references describe the dissolution of NBPT and/or DCD and its incorporation into urea based liquid fertilizers. Mostly organic solvents are used to dissolve these compounds, which either are not compatible with aqueous (water) based fertilizers and/or environmentally hazardous (WO2017/083714, US4517003, WO2017/081183, US4530714, US2007/157689, US8048189, US2015/0174140, US2014/40090432).

Other references disclose the dissolution of NBPT and DCD in protic or non-protic organic water miscible solvents, like alcohols, amino alcohols, DMSO, triethyl phosfate and N-methyl-2-pyrrolidone (NMP). Examples are US2010/206031, US2014/090432, WO2016/054012 and US2018/002246. These solutions of one or more organic solvents generally still have a flash point, and are flammable. Some of these solutions make use of relatively expensive solvents.

There is a demand for the dissolution of NBPT and/or DCD in materials that are less hazardous, cheaper and that lead to non-flammable products. There is further a demand for solutions that are compatible with aqueous (water) based fertilizers.

Such solutions advantageously can then be added as additive to N- and/or S-containing fertilizers, wherein especially a mixed N-S fertilizer (III) can be advantageous to the end user. Additives are easy to use and give less dosage problems. The use of concentrates further reduces transport costs.

The art does not yet provide a water based solution of such urease and/or nitrification inhibitors, wherein the inhibitors are present in high concentration. The art does not yet provide either solutions with reduced amount of organic solvents. Today no solution has been provided for combining such inhibitors to sulfur based liquid fertilizers, as this has been seen as problematic and difficult.

Several sulfur containing fertilizers are in use for liquid fertilizer applications, for example (bi)sulfite based liquid fertilizer, such as polysulfide, potassium sulfite and thiosulfate based liquid fertilizers. Preferred in the present invention are thiosulfate based liquid fertilizers.

Thiosulfate based liquid fertilizers are well known, and comprise for example:
- Ammonium thiosulfate, which is a 50-60% aqueous solution, (grade is 12-0-0-26S).
- Potassium thiosulfate (KTS®), which is a 50% aqueous solution, (grade is 0-0-25-17S).
- Calcium thiosulfate (CaTs®), which is a 24-25% aqueous solution, (grade is 0-0-0-10S-6Ca)
- Magnesium thiosulfate, which is a 24-25% solution, (grade is 0-0-0-10S-4Mg)

Thiosulfates readily oxidize to dithionate, then to tetrathionate, and finally to sulfates, in accordance with the following sequence:

S₂O₃²⁻ + O₂ ⇔ S₄O₆²⁻ → SO₄⁻²

This transformation makes thiosulfates useful as fertilizers especially in combination with cations such as ammonium, potassium, calcium, and magnesium.

Thiosulfate is an important intermediate in microbial sulfur cycling in soils and sediments. It has been suggested that tetrathionate might be an inhibitor of soil urease by reacting with -SH groups in jackbean urease to form an S-sulpho derivative, as follows:

RSH + S₄O₆⁻² → RS-S₂O₃H + S₂O₃⁻²

RS-S₂O₃H + O₂ → RS-SO₃H + SO₂

Ammonium thiosulfate has been used in conjunction with urea and urea-containing fertilizer products for the purpose of reducing nitrogen loss. For example, it has been suggested that addition of ammonium thiosulfate to an urea ammonium nitrate fertilizer solution (UAN) can slow the urea hydrolysis rates after application to soil (Sullivan, D.M., and Havlin, J. L., Soil Sci. Soc. Am. J., 56, 957-960, 1992). However, the urease inhibition activity of ammonium thiosulfate is not observed in all circumstances, and the effect is considered insufficient. For example, ammonium thiosulfate was ineffective when applied on a vegetable mulch, wheat stubble, or crop residue (Goos, R.J., 1987. Proceedings of the 17th N. Central Extension Industry Soil Fertility Workshop, October 28-29, 1987). Although some suggestions have been made, the precise cause for the varying results is unclear. Yet, thiosulfate, may be the effective nitrification inhibitor.

Liquid sulfur based fertilizers like thiosulfate fertilizers are often combined by a distributor or farmer with other liquid fertilizers, like for example dissolved urea or UAN.

Only a few references describe liquid fertilizer compositions comprising a sulfur based fertilizer, urea and an urease and/or nitrification inhibitor. US 5024689 describes liquid fertilizers comprising urea, ammonium thiosulfate, and dicyandiamide. Gautney et al. (Ind. Eng. Chem. Prod. Res. Dev. (1985) 24:155-181) describe the solubility of DCD and some other inhibitors in liquid fertilizers.

There is a need for water based solutions of urease inhibitors like NBPT and/or nitrification inhibitors like DCD that can be mixed with other water based liquid fertilizer compositions in varying amounts, including the above sulfur containing liquid fertilizers.

There is furthermore a need for concentrated solutions comprising urea and sulfur containing fertilizers, with in particular relatively large amounts of sulfur, having an improved long availability of nitrogen fertilizer.

### SUMMARY OF THE INVENTION

In a first aspect, the invention relates to an additive solution (I) of at least one urease inhibitor (d1) and/or at least one nitrification inhibitor (d2), said solution comprising:
- urea (a1) and/or an urea-aldehyde adduct (a2) and/or an urea-triazone fertilizer (a3), water (b), at least one organic co-solvent (c), and further
- at least one urease inhibitor (d1) and/or at least one nitrification inhibitor (d2),
wherein compounds (a) are present in an amount of at least about 20 wt%, preferably at least about 25 wt%, relative to the total weight of compounds (a)+(b)+(c), and
wherein compounds (d) are present in an amount of from about 0.04 to about 40 wt%, preferably from about 0.1 to about 30 wt%, relative to the total weight of the additive solution (I).

Within the context of the invention, compounds (a1) and/or (a3) are preferred over compounds (a2) in view of their capacity to dissolve high amounts of the inhibitors (d1 and/or d2). Compounds (a1), (a2) and (a3) may be referred to herein individually or collectively as "(a)" or "compound (a)" or "compounds (a)".

Preferably, the additive solution hence comprises:
- urea (a1) and/or an urea-triazone fertilizer (a3), water (b), at least one organic co-solvent (c), and further
- at least one urease inhibitor (d1), or a combination of at least one urease inhibitor (d1) and at least one nitrification inhibitor (d2),
wherein the amount of urease inhibitors (d1) is at least about 1 wt%, preferably at least about 2 wt%, relative to the total weight of the additive solution (I).

In a further embodiment, preferably, the additive solution comprises:
- urea (a1) and/or an urea-triazone fertilizer (a3), water (b), at least one organic co-solvent (c), and further
- at least one nitrification inhibitor (d2), or a combination of at least one nitrification (d2) inhibitor and at least one urease inhibitor (d1),
wherein the amount of nitrification inhibitors (d2) is at least about 0.1 wt%, preferably at least about 1 wt%, more preferably at least about 2 wt%, relative to the total weight of the additive solution (I).

Preferably, the additive solution comprises urease inhibitors (d1) in an amount of at least 5 wt%, preferably at least about 15 wt%, up to 30 about wt% and more, and/or a nitrification inhibitors (d2) in an amount of at least about 5 wt%, preferably at least about 15 wt%, up to about 30 wt% and more, relative to the total weight of the additive solution (I).

The co-solvent generally is a polar protic and/or a polar non-protic solvent that is miscible with water, though some non-polar solvents can be used too.

The invention furthermore relates to a process for preparing an additive solution (I) as described above, comprising the step of dissolving at least one urease inhibitor (d1) and/or at least one nitrification inhibitor (d2) in a solution comprising: (a) urea (a1) and/or an urea-aldehyde adduct (a2) and/or an urea-triazone fertilizer (a3), (b) water and at (c) least one organic co-solvent that preferably is selected from polar protic and/or polar non-protic solvents that are miscible with water. Preferred solvents (a) are urea (a1), urea-triazone fertilizers or a mixture of both (a1+a3).

Preferred is hence a process for preparing an additive solution as described above (I), comprising the step of dissolving at least one urease inhibitor (d1) and/or at least one nitrification inhibitor (d2) in a solution comprising: (a) urea (a1) and/or an urea-triazone fertilizer (a3), (b) water and at (c) least one organic co-solvent that preferably is selected from polar protic and/or polar non-protic solvents that are miscible with water.

The invention furthermore relates to a process for preparing a liquid fertilizer (II) having at least one urease inhibitor (d1) and/or at least one nitrification inhibitor (d2), comprising the step of adding to a liquid fertilizer at least one additive solution (I) as described above.

The invention furthermore relates to a liquid mixed N-S fertilizer composition (III) comprising:
- water,
- a sulfur containing fertilizer, selected from polysulfides, (bi)sulfites and/or thiosulfate fertilizers,
- a nitrogen containing fertilizer, more in particular an urea based nitrogenous fertilizer, and
- at least one urease inhibitor (d1) and/or at least one nitrification inhibitor (d2),
wherein the amount of S is more than about 2 wt%, preferably more than about 5 wt%, relative to the total weight of the fertilizer (III), and
wherein the amount of N is more than about 5 wt%, preferably more than about 20 wt%, and more preferably more than about 25 wt%, relative to the total weight of the fertilizer (III).

The invention furthermore relates to a kit-in-parts containing:
- at least one additive solution (I) as described, optionally containing a dye,
- at least one liquid sulfur containing fertilizer, that preferably is a stock solution of a thiosulfate fertilizer, the liquid sulfur containing fertilizer optionally containing a different dye, and,
- optionally, a sheet or a card with dosage recommendations.

### DETAILED DESCRIPTION OF THE INVENTION

The inventors discovered that an urea solution in water, in combination with an organic solvent provided a way to permit the dissolution of high concentrations of urease inhibitors like NBPT and/or nitrification inhibitors like DCD. Inhibitor concentrations of up to about 20 wt% and more, even up to about 30 wt% and more could be reached, with substantially lowered amount of organic solvents.

The urea solution in its most simple form is an aqueous solution of "free" urea in water. Urea dissolves well in water. The form of urea plays herein no role. Both prills and granules can be used. Alternatively one can use "liquid" urea products available in the market such as the products from Rentech Energy that are provided under the form of a liquid (having ∼52 wt% urea) or under the form of a paste (having ∼69 wt% of urea). Also suitable was N-Sure®, which is an urea-triazone fertilizer. Urea-aldehyde adducts can also be used.

Preferably at least about 20 wt% of urea (a1) and/or of urea-aldehyde adducts (a2) and/or of urea-triazone fertilizers (a3) is present in the additive solution (I) of the invention, which in a preferred embodiment is an aqueous solution. Examples of suitable urea-aldehyde adducts are urea-formaldehyde adducts. Compounds (a1), (a2) and (a3) advantageously are all different from each other. The term 'urea' in particular refers to 'free urea', not to urea adducts. Preferably the amount of urea (a1) and/or urea-aldehyde adducts (a2) and/or of urea-triazone fertilizers (a3) is at least about 25 wt%, more preferably at least about 30 wt%. Weight percentages (wt%) are herein relative to the total weight of compounds (a)+(b)+(c).

Preferred in the context of the invention are urea (a1) and/or urea-triazone fertilizers (a3), as these permit dissolving of the highest amounts of NBPT and/or DCD.

An urea-water solution is one example of a preferred way according to the invention to dissolve the urease (d1) and/or nitrification inhibitors (d2). The ratio of water to urea generally will be between about 40 wt% water to about 60 wt% urea and about 60 wt% water to about 40 wt% urea, relative to the total weight of water and urea. The preferred ratio of urea to water is about 1:1.

In another preferred embodiment of the invention, an urea-triazone fertilizer (a3) is used as solvent. Not suitable as solvent was UAN (which besides urea also contains ammonium nitrate) as UAN did not allow dissolving of high amounts of compounds (d1) and/or (d2). Urea-triazone is a liquid composition that may contain an amount of water of as low as about 8 wt%.

In one embodiment of the invention an urea (a1) solution in water (b) is used for dissolving the above inhibitors (like NBPT and/or DCD). In yet another embodiment of the invention, an urea-triazone fertilizer (generally having from about 5 to about 10 wt% of water is used as solvent by itself or in combination with urea. In some embodiments, both urea (a1) and urea-triazone fertilizers (a3) were used as solvent.

Depending on the urea source, the additive solution will contain about 3 wt% water or more, preferable about 4 wt% or more. If urea is used, the amount of water generally will be about 15 wt% or more, preferably about 20 wt% or more. In one embodiment, the amount of water is about 40 wt% or less, preferably about 35 wt% or less.

The additive solution further comprises one or more organic solvents (further referred to herein as "co-solvents"). The combination of dissolved urea and organic solvent is unexpectedly effective to dissolve high amounts of the inhibitors (d) in solution. The same is true for the combination of an urea-triazone fertilizer and organic solvents. This provides significant benefits, such as the ability to produce a highly stable additive solution. This, in turn, provides significant economic benefits, because the additive solution may be stored in a stable condition for extended periods of time at room temperature, without the need to add stabilizers such as ammonium polyphosphates. The co-solvent (c) is herein different from compounds (a) and also different from (b) water (which is an inorganic solvent).

Co-solvents (c) for use in the additive solution of the invention are preferably chosen from one or more polar protic and/or polar non-protic solvents. Most preferred in the context of the invention are solvents are miscible with water. Protic organic solvents that might be used include C1-C6 alcohols like methanol, ethanol, n-propanol, i-propanol, n-butanol, i-butanol; glycols like ethylene glycol, propylene glycol, glycerol; amino-alcohols like ethanolamine, di-ethanol amine and triethanol amine. Other suitable solvents are dimethylsulfonoxide, dimethylformamide (DMF), dioxanes, triethyl phosphate and/or N-methyl-2-pyrrolidone (NMP). Non-protic polar solvents include dimethylsulfoxide (DMSO), dimethyl formamide (DMF), triethyl phosphate, dioxane and the like. Preferred organic co-solvents include ethanol, ethylene glycol, DMSO and/or dioxane. Most preferred are ethanol and/or DMSO for dissolving for increasing the solubility of the inhibitors. Ethanol can work for both NBPT and DCD. DMSO is preferred for DCD.

The amounts of inhibitors (in particular NBPT and/or DCD) throughout the invention are expressed as weight percentages (wt%) relative to the total weight of the additive solution (I).

The co-solvent (c) is preferably used in an amount from about 5 to about 60 wt%, preferably in an amount from about 10 to about 55 wt%, and more preferably from about 15 to about 50 wt%, relative to the total weight of the additive solution (I) of the invention. In preferred embodiments, their amount is below about 45 wt%, preferably below about 40 wt%.

Presented in the present invention, is a solution (I) of at least one urease inhibitor (d1) and/or at least one nitrification inhibitor (d2), said solution comprising urea (a1), an urea-aldehyde adduct (a2) and/or an urea-triazone fertilizer (a3), water (b) and, ideally, also at least one organic co-solvent (c).

More in particular there is provided a solution (I) of an urease inhibitor (d1), a nitrification inhibitor (d2), or a combination of both, wherein the solution comprises:
- urea (a1) and/or an urea- aldehyde adduct (a2) and/or an urea-triazone fertilizer (a3), water (b), advantageously, also at least one organic co-solvent (c), and further
- at least one urease inhibitor (d1) and/or at least one nitrification inhibitor (d2).

Even more in particular there is provided a solution (I) of an urease inhibitor (d1), a nitrification inhibitor (d2), or a combination of both, wherein the solution comprises:
- urea (a1) and/or an urea-triazone fertilizer (a3), water (b), advantageously, at least one organic co-solvent (c), and further
- at least one urease inhibitor (d1) and/or at least one nitrification inhibitor(d2).

In any of the above, compounds (a) are usually present in an amount of at least about 20 wt%, preferably at least about 25 wt%, relative to the total weight of compounds (a)+(b)+(c). For compounds (a3) this amount can even be higher.

Usually the inhibitors (d1 and/or d2) are present in an amount of from about 0.04 to about 40 wt%, relative to the total weight of the solution (I), preferably in an amount of from about 0.1 to about 30 wt%. Preferably the amount of inhibitors (d1 and/or d2) in said solution (I) is at least about 1 wt%, more preferably at least about 2 wt%. More information on preferred amounts for the different compounds infra.

Such solutions with possibly relative high amounts of nitrification and/or urease inhibitors are named hereinafter "additive solutions". They can also be referred to as "inhibitor compositions" or "inhibitor solutions". Preferred in the context of the invention are "water based" solutions. In a preferred embodiment of the invention the additive solutions (I) of the invention are in the form of "concentrates" that can be added easily to liquid fertilizers (II). In a preferred embodiment of the invention, the liquid fertilizer (II) is provided in the form of a stock solution, meaning that in general water or another aqueous medium is added to become a final liquid fertilizer.

In additive solutions (I) of the invention, the inhibitors in question usually are present in an amount of at least about 5 wt%, preferably at least about 10 wt%, or even more preferably at least about 15 wt%, relative to the total weight of the additive solution (I). Even amounts up to about 20 wt%, up to about 25 wt%, or even up to about 30 wt% and more are achievable.

The urease inhibitors (d1) like NBPT usually are present in an amount from about 0.04 to about 40 wt% in the additive solution, preferably this amount is from about 0.1 to about 30 wt%, and more preferably this amount is from about 0.25 to about 30 wt%. Suitable amounts include for example at least about 1 wt%, preferably at least about 2 wt%, more preferably at least about 3 wt%, and even more preferably at least about 5 wt%. Preferred though are concentrates that comprise at least about 10 wt%, at least about 15 wt%, at least about 20 wt%, at least about 25 wt% up to about 30 wt% or more of urease inhibitors such as NBPT.

The nitrification inhibitors (d2) like DCD preferably are present in amount from about 0.1 to about 40 wt% in the additive solution, more preferably the amount is from about 0.1 to about 30 wt%. Suitable amounts include for example at least about 0.1 wt%, at least about 2 wt%, at least about 3 wt%, or at least about 5 wt%. Preferred though are concentrates that comprise at least about 10 wt%, at least about 15 wt%, at least about 20 wt%, at least about 25 wt% up to at least about 30 wt% or more of nitrification inhibitors such as DCD.

An embodiment of the invention relates to an additive solution (I) of at least one urease inhibitor (d1), or a combination of at least one urease inhibitor (d1) and at least one nitrification inhibitor (d2), wherein the solution comprises:
- urea (a1) and/or urea-triazone fertilizers (a3), water (b) and at least one organic co-solvent (c), and further
- at least one urease inhibitor (d1), and optionally also at least one nitrification inhibitor (d2),
wherein compounds (a) are present in an amount of at least about 20 wt%, relative to the total weight of compounds (a)+(b)+(c), and
wherein compounds (d1) are present in amount of at least about 0.04 wt%, preferably at least about 1 wt%, more preferably at least about 2 wt%, relative to the total weight of the solution (I).

Another embodiment of the invention relates to an additive solution (I) of at least one nitrification inhibitor (d2), or a combination of at least one nitrification inhibitor (d2) and at least one urease inhibitor (d1), wherein the solution comprises:
- urea (a1) and/or urea-triazone fertilizers (a3),water (b) and at least one organic co-solvent (c), and
- at least one nitrification inhibitor (d2), and optionally also at least one urease inhibitor (d1),
wherein compounds (a) are present in an amount of at least about 20 wt%, relative to the total weight of compounds (a)+(b)+(c), and
wherein compounds (d2) are present in amount of at least about 0.1 wt%, preferably at least about 1 wt%, more preferably at least about 2 wt%, relative to the total weight of the solution (I).

More typical amounts for compounds (a), compounds (d1) and compounds (d2) are given above. Typical amounts for the other compounds you find below.

Urease inhibitors (d1) (in any of the above) are generally chosen from the group of: hydroxyurea, α-hydroxyketone, triketone oximes, hydroquinone (HQ), nitrapyrin and/or phosphoric triamide type inhibitors. Preferred are phosphoric triamide type inhibitors. Preferred urease inhibitors includes phosphoric triamide type inhibitors, preferred are thiophosphoric triamides, more preferred aliphatic thiophosphoric triamides. Particularly preferred are N-alkyl and/or N-acyl thiophosphoric triamides. Examples thereof are N-(n-Propyl)-thiophosphoric triamid (NPPT) and/or N-(n-butyl)-thiophosphoric triamide (NBPT). Most preferred is NBPT due to its proven activity. In a particular embodiment of the invention the urease inhibitor present in the additive solution is NPBT, used alone or in combination with one or more other urease inhibitors.

Nitrification inhibitors (d2) (in any of the above) are generally chosen from the group of: dicyandiamide (DCD), 3,4-dimethylpyrazzole phosphate (DMPP), 2-chloro-6-(trichloromethyl)-pyridine (N-Serve), thiourea (TU), 2-sulfanilamidothiazole, 4-amino-1,2,1,triazole, 3-mercapto-1,2,4-triazole, ammonium dithiocarbamate (ADTC), ammonium thiosulfate (ATS) and/or 3-mercapto-benzothiazole (MBT). Preferred herein are DCD, ATS, TU and/or DMPP, more preferred are DCD, ATS and/or DMPP, and most preferred is DCD due to its efficacy, besides it availability and environmental safety. In a particular embodiment of the invention the nitrification inhibitor present in the additive solution is DCD, used alone or in combination with one or more other nitrification inhibitors.

In one embodiment of the invention the additive solution (I) comprises NBPT. In another or the same embodiment, the additive solution (I) comprises DCD.

In another embodiment of the invention the additive solution (I) comprises NBPT and no other urease and/or nitrification inhibitors. In yet another embodiment of the invention the additive solution comprises DCD and no other nitrification and/or urease inhibitors. In still yet another embodiment of the invention, the additive solution comprises both NBPT and DCD but no other nitrification and/or urease inhibitors.

The co-solvent (c) that is used in the invention can be any organic solvent that is able to dissolve the inhibitors in question (like NBPT and/or DCD) and that is miscible with water. Suitable candidates can for instance be found amongst polar protic solvents and/or polar non-protic solvents. Preferably no strong acids are used. Protic organic solvents include C1-C6 alcohols like methanol, ethanol, n-propanol, i-propanol, n-butanol, i-butanol; glycols like ethylene glycol, propylene glycol, glycerol; amino-alcohols like ethanolamine, di-ethanol amine and triethanol amine and the like. Non-protic polar solvents include dimethylsulfoxide (DMSO), dimethyl formamide (DMF), triethyl phosphate, dioxane and the like.

Particularly suitable are: lower alcohols (especially C1-C6 alcohols, and in particular ethanol), glycols (like e.g., ethylene glycol), dimethylsufonoxide (DMSO), amino-alcohols, dimethylformamide (DMF), dioxanes and/or triethyl phosphate. Preferred are ethanol, glycols like ethylene glycol, DMSO, DMF and/or dioxanes. Most preferred are ethanol and/or DMSO.

C1-C6 alcohols and in particular ethanol were found suitable to dissolve high amounts of urease inhibitors like NBPT. They can be used to dissolve DCD too. Organic solvents like DMSO, dioxanes and DMF were found most suitable to dissolve high amounts of nitrification inhibitors like DCD. Particularly preferred for that purpose was DMSO.

In one embodiment of the invention the urease and/or nitrification inhibitors are dissolved in an urea solution in water supplemented with at least one co-solvent to reach high enough concentrations of the inhibitors. In another embodiment of the invention the urease and/or nitrification inhibitors are dissolved in an urea-triazone fertilizer (having e.g., about 5 to about 10 wt% of water) supplemented with at least one co-solvent to reach high enough concentrations of the inhibitors. In that case no extra addition of water is needed to prepare a solution, as there is enough water in the product. In yet another embodiment of the invention, a combination of (1) urea in water and of (2) an urea-triazone fertilizer are used to dissolve the inhibitors, and advantageously at least one co-solvent is then used to arrive at high enough concentrations.

Apart from the above, the additive solutions of the invention (any of the above) optionally may further comprise at least one of (e): dyes, colorants, odor masking agents, flow aids, surfactants, silicas, thickeners, viscosity modifiers, pH control agents, etc. Preferred compounds (e) are dyes and/or colorants.

In an embodiment, the sum of the weight percentages of compounds (a)+(b)+(c)+(d)+(e), when expressed relative to the total weight of the additive solution (I) equals 100 wt%. In another embodiment, the sum of the weight percentages of compounds (a)+(b)+(c)+(d), when expressed relative to the total weight of the additive solution (I) equals at least about 70 wt%,preferably at least about 80 wt%, more preferably at least about 90 wt%, and most preferably this sum adds up to 100 wt%.

Further provided in the invention is a process for preparing additive solutions according to the invention (any of the above).

Provided for instance is a process for preparing an additive solution of the invention, comprising the step of dissolving at least one urease inhibitor (d1) and/or at least one nitrification inhibitor (d2) in a solution comprising: urea (a1) and/or an urea-triazone fertilizer (a3), water(b) and at least one co-solvent (c). In an embodiment of the invention only urease inhibitors (d1) are there. In another embodiment of the invention only one nitrification inhibitor (d2) are present. In yet another embodiment of the invention both compounds (d1) and (d2) are present in the additive solution. A preferred solvent is urea (a1). In a particular embodiment of the invention one or more compounds (a3) are used as solvent. Possibly a mix of compounds (a1) and (a2) is used in the process of the invention. With the process of the invention any of the earlier described additive solutions (I) of the invention can be prepared.

In one embodiment of the invention a solution of urea (a1) in water (b), and at least one organic co-solvent (c) is used to dissolve the inhibitors (d). In another embodiment of the invention a solution of urea-triazone fertilizer(a3), water (a3, b), and at least one organic co-solvent (c) is used to dissolve the inhibitors (d).

If needed, then some heating is used to prepare a clear liquid solution. If the reaction is endothermic then heating till room temperature (RT, about 18 °C to about 25 °C) may suffice. In other instances a heating up to about 100 °C, more preferably up to about 90 °C may be useful.

Generally the solution is stirred for a while to become a homogeneous solution. Shear stirring can be used but is not necessary. In general solutions of the invention can be stored at temperatures from about 10 °C to about 40 °C (in particular at RT) for about 6 months, even up to 1 year without phase separation.

Optionally, one or more of the following compounds may be included in the additive solution of the invention: dye, colorant, odor masking agent, flow aid, surfactant, silica, thickener, viscosity modifier, ph control agent, etc (compounds e). An advantage of the invention is that even without surfactants and pH control agents a clear and stable solution can be obtained.

Provided in the invention are also additive solutions that can be obtained via the above process(es).

An advantage of additive solutions (I) of the invention is also that they are stable at room temperature (RT) for longer periods, without the need for stabilizers like ammonium polyphosphates. Usually less than about 0.5 wt%, preferably less than about 0.4 wt% of ammonium polyphosphates are present in additive solutions of the invention. In a specific embodiment of the invention no ammonium polyphosphates are present in additive solutions of the invention.

Additive solutions of the invention were found to mix well with liquid fertilizers well known in the art.

Provided in the invention is for instance a process for preparing a liquid fertilizer (II) having at least urease inhibitor (d1) and/or at least one nitrification inhibitor (d2), comprising the step of adding an additive solution (I) of the invention (any of the above) to a sulfur containing liquid fertilizer (II). For instance DCD containing additive solutions of the invention were found compatible with thiosulfate fertilizers like ammonium thiosulfate.

Further provided in the invention is a process for preparing a liquid fertilizer (II) having at least one nitrification inhibitor (d1) and/or at least one urease inhibitor (d2), comprising the step of adding an additive solution (I) of the invention (any of the above) to a nitrogen containing liquid fertilizer (II). A preferred nitrogen fertilizer is one that comprises urea, more in particular urea and ammonium nitrate (like UAN, preferably UAN 28-32).

The nitrogen fertilizer can further comprise a sulfur containing fertilizer too. The sulfur containing fertilizer in general is chosen from polysulfides, (bi)sulfite and/or thiosulfate fertilizers. By "(bi)sulfite" is meant sulfite, bisulfite or a mixture of both.

Preferably the urease inhibitors (d1) are present in the liquid fertilizer in an amount of from about 0.04 to about 5 wt%, and preferably the nitrification inhibitors (d2) are present in the liquid fertilizer in an amount of from about 0.5 to about 10 wt%, this relative to the total weight of the liquid fertilizer.

The preferred concentration of NBPT in the liquid fertilizer (II) is from about 0.04 to about 2 wt%, preferably from about 0.04 to about 1.5 wt%.

The preferred end concentration for DCD in the liquid fertilizer (II) is from about 0.2 to about 5 wt%, preferably from about 1 to about 2 wt%.

When both urease inhibitors and nitrification inhibitors are present then they are generally present in a ratio of between 1:10 to 6:10, preferably 2:10 to 3:10. Provided in the invention are any liquid fertilizers that can be obtained via the process(es) here described.

The present invention furthermore provides for liquid "concentrated" nitrogen based fertilizers (II), preferably comprising urea, and more preferably comprising urea and ammonium nitrate, to which an additive solution of the present invention (any of the above) is added. Possibly an additive solution having up to about 30 wt% NBPT and an additive solution having up to about 30 wt% DCD (possibly with an urea-triazone fertilizer (a3) as solvent instead of an urea solution in water) are both prepared, where after at least one of them, possibly both, are added to a stock solution of a liquid fertilizer (II), for example a stock solution comprising an UAN fertilizer, or a stock solution comprising an UAN fertilizer combined with a thiosulfate liquid fertilizer.

In one embodiment, it is preferred to prepare an additive solution of urea in water and a co-solvent with up to about 30 wt% NBPT and another one with up to about 30 wt% DCD (possibly with an urea-triazone fertilizer (a3) as solvent instead of an urea solution in water), and combine the required amounts of NBPT and/or DCD solutions with a stock solution of a liquid fertilizer (II), for example one comprising an UAN fertilizer, or an UAN fertilizer combined with a thiosulfate liquid fertilizer (II).

In another embodiment, it is preferred to prepare an additive solution of urea in water and optionally a co-solvent with up to about 30 wt% NBPT and another one with up to about 30 wt% DCD (possibly with urea-triazone fertilizer as solvent instead of an urea solution in water), and combine the required amounts of NBPT and/or DCD solutions with a stock solution of a liquid sulfur containing fertilizer, for instance a thiosulfate liquid fertilizer to which, optionally, an UAN fertilizer is added. This is suitable in particular for use with one or more DCD-based additive solutions of the invention, possibly one containing DCD and NBPT.

In yet another embodiment, it is preferred to prepare an additive solution of urea in water and optionally a co-solvent with up to about 30 wt% NBPT and another one with up to about 30 wt% DCD (possibly with urea-triazone fertilizer as solvent instead of an urea solution in water), and combine the required amounts of NBPT and/or DCD solutions with a stock solution of a mixed N-S fertilizer (III), comprising e.g., both an UAN fertilizer and a thiosulfate liquid fertilizer.

In any of the above, it is possible to use one stock solution having both NBPT and DCD, instead of using 2 separate stock solutions ("additive solutions").

The invention further provides for additive solutions (I) obtainable according to any of the processes described herein and for liquid fertilizers (II) or (III) obtainable according to any of the processes described herein.

Additive solutions (I) of the invention of the are in particular suitable for the making of liquid mixed N-S fertilizers (III).

Provided in the invention is hence a liquid mixed N-S fertilizer (III) composition comprising:
- water,
- a sulfur containing fertilizer (SF1), selected for instance from polysulfide, (bi)sulfite and/or thiosulfate fertilizers,
- a nitrogen containing fertilizer (NF2), more in particular an urea based nitrogenous fertilizer, and
- at least one urease inhibitor (d1) and/or at least one nitrification inhibitor (d2) (like NBPT and/or DCD),
wherein the amount of S is more than about 2 wt%, preferably more than about 5 wt%, relative to the total weight of the fertilizer (III), and
wherein the amount of N is more than about 5 wt%, preferably more than about 20 wt%, and more preferably more than about 25 wt% relative to the total weight of the fertilizer (III) .

Such liquid mixed fertilizer (III) can be prepared from one or more additive solutions (I) of the invention (any of those described heretofore).

Preferred sulfur containing fertilizers are thiosulfates, and more in particular Methiosulfates, wherein "Me" is (NH₄)₂, K₂, Ca, Mg, Mn, Zn, Cu and/or Fe. "Me" preferably is (NH₄)₂, K₂, Ca, Mg and/or Mn. Preferred are (NH₄)₂, K₂, Ca and/or Mg. Most preferred is (NH₄)₂. Often the thiosulfates are provided in the form of an aqueous solution having > 4 wt% Me-thiosulfate (on solids); preferably more than about 5 wt%, more preferably more than about 10 wt%.

Preferred nitrogen containing fertilizers are urea based fertilizers that can be urea, UAN, N-sure (urea-triazone), urea-methylene etc. Preferred are nitrogenous fertilizers that contain urea and ammonium nitrate, like UAN. In the mixed liquid N-S fertilizer (III) at least one urease inhibitor and/or at least one nitrification inhibitor are present.

Preferred for use in the context of the present invention are liquid N and/or liquid S fertilizers. In a preferred embodiment of the invention, both the sulfur containing fertilizer (SF1) and the nitrogen containing fertilizer (NF2) are liquid fertilizers. They can be added as separate fertilizers, or can be provided under the form of a single liquid N-S fertilizer to which then at least one urease inhibitor (d1) and/or at least one nitrification inhibitor (d2) (like NBPT and/or DCD) are then added.

In another embodiment of the invention, part of the fertilizers can be solid in nature. For instance, a solid urea ammonium sulfate (like e.g., a 33-0-0-12S fertilizer) can be added to or be present in the liquid mixed N-S fertilizer (III) of the invention.

The urease inhibitor preferably is NBPT and the nitrification preferably is DCD. If NBPT is present, then often in a concentration of more than about 0.04 wt%, more preferably more than about 0.1 wt%, relative to the total weight of the mixed liquid fertilizer (III). If DCD is present, then often in a concentration more than about 0.04 wt%, preferably more than about 0.1 wt%, and more preferably more than about 0.2 wt%, relative to the total weight of the mixed liquid fertilizer (III).

In an embodiment of the invention, NBPT is present, either alone or with DCD.

In a particular embodiment of the invention both NBPT and DCD are present in the mixed N-S liquid fertilizer (III) as described herein. In that case the preferred ratio of NBPT to DCD is from 0.1:1 to 10:1; preferred is a ratio of from 0.1:1 to 1:1, an example of a possible ratio is about 0.25:1.

The mixing, adding of the required amounts of inhibitors from one or more additive solutions of the invention can be done at the level of the liquid fertilizer producer or the distributor. In that respect, another aspect of the invention relates to a container tank holding one or more of the above described fertilizer compositions. The container tank can be holding tank. Alternatively, the liquid fertilizers (II) or (III) herein described (any of those described) can be pumped to tanker trucks for distribution.

Alternatively, the mixing can be done at the level of the end user, just before use. In that respect, another aspect of the invention relates to a kit-in-parts containing:
- at least one additive solution (I) of the invention, optionally containing a dye
- at least one liquid sulfur containing fertilizer (any of those described), optionally containing a different dye, and,
- optionally, a sheet or card with dosage recommendations.

Preferably the liquid sulfur containing fertilizer is a liquid thiosulfate fertilizer, most preferably is a stock solution of a liquid thiosulfate fertilizer.

Liquid fertilizers (II) or (III) as described herein preferably contain from about 28 to about 32 wt% of nitrogen. Preferred is an amount of about 28 wt% of total nitrogen. In another or the same embodiment, liquid fertilizers (II) or (III) as described herein preferably contain from about 1 to about 10 wt% of sulfur, preferably they contain about 5 wt% of total sulfur.

Yet another aspect of the invention relates to the use of one or more additive solutions (I) of the invention for the making of an 28-0-0-5S fertilizer.

In any of the embodiments described herein the most preferred urease inhibitor is NBPT and the most preferred nitrification inhibitor is DCD.

In a preferred embodiment the ratio of water : urea : co-solvent is about 1:1:1. In another preferred embodiment the ratio of water : urea : co-solvent is about 1:1:2. This means that in additive solutions (I) of the invention far less organic solvents are used compared to solutions in organic solvents that are on the market. And if e.g., ethanol is used as co-solvent then carcinogenic solvents like DMSO can be avoided. The use of ethanol (used in relatively small amounts) further has the advantage that the additive solution obtained is not flammable.

When an urea-triazone fertilizer (a3) is used as solvent instead of the urea in water solution then extra water can be added, but this is not necessary as this type of fertilizer in general is a liquid product. Additive solutions of this type were particularly suitable to dissolve up to about 15 wt% and more, preferably from about 20 wt% and more of DCD.

In case the urease and nitrification inhibitors are combined in one solution, it is preferred to use relative amounts according their required activity, but other relative amounts can be used. Suitable amounts are 10:1 to 1:20, preferably 1:1 to 1:10, like for example about 1:2 for NBPT to DCD, preferably about 1:4 for NBPT to DCD. More preferred ratios of the urease inhibitor to nitrification inhibitor given as ratio of NBPT to DCD is between 1:10 to 6:10, more preferably between 2:10 to 3:10.

The additive solution may further comprise further components like for example odor masking agents, colorants, dyes, pH control agents, flow aids, surfactants, and combinations thereof (compounds e).

The odor of the compositions of the present invention is anyhow relatively low, in comparison to the whole-organic solvent solutions of the prior art. Nevertheless, it can be useful to add such a component, in particular if the additive has further useful properties, like for example also lowering the salt out temperature.

A preferred odor masking agent includes one of isoamyl butyrate, 4-allylanisole, limonene, terpineol, terpenes, 4-(2,6,6-trimethyl-2-cyclo-hexenyl)-3-buten-2-one, benzaldehyde, diethyl malonate, cyclohexyl acetate, anisole, α-ionone, mint oil, Japanese cherry and rose ketones.

Generally, the additive solution comprises an amount of less than about 5 wt% (by total weight of composition) of odor masking agent, preferably, less than about 3 wt%. Preferably, the additive solution comprises an amount of from about 1 wt% to about 3 wt% of the odor masking agent (for example, isoamyl butyrate). The odor masking agent preferably lowers the salt-out temperature of the composition

In one embodiment, a dye or colorant is present in the additive solution at an amount of about 0.05 wt% or higher, preferably about 0.1 wt%, or higher (wt% relative to the total composition). Preferred are dyes and more in particular food grade dyes. The dye - if present - generally is present in the composition in an amount of about 3 wt% or lower, preferably about 1 wt% or lower. Suitable examples include yellow, blue, red and/or green food grade dyes.

As pH control agents, acid, base or buffering compounds can be used. If required, suitably, an acidic compound can be included as a pH control agent to maintain or to adjust the pH of the additive solution. Illustrative acids can include, but are not limited to, mineral acids such as hydrochloric acid, sulfuric acid, nitric acid, phosphoric acid, acetic acid, ammonium bisulfite (ABS) or any combination thereof. If required, suitably a basic compound can be included as a pH control agent to maintain or to adjust the pH of the additive solution. Illustrative base compounds for adjusting the pH can include, but are not limited to, ammonia, amines, e.g., primary, secondary, and tertiary amines and polyamines, sodium hydroxide (NaOH), potassium hydroxide (KOH), or a combination thereof. Other Illustrative pH buffering compounds are for instance triethanolamine, sodium borate, potassium bicarbonate, sodium carbonate, potassium carbonate, or any combination thereof.

The additive solution (I) can be mixed with dissolved fertilizers. Fertilizers are common water soluble inorganic fertilizers that provide nitrogen, and optionally further nutrients such as phosphorus, potassium, sulfur and other nutrients. Examples of such fertilizers include: for nitrogen as the nutrient: urea, urea-aldehyde oligomers, nitrates and or ammonium salts such as ammonium nitrate, including in combination with urea e.g., as UAN type materials, calcium ammonium nitrate, ammonium sulfate nitrate, ammonium phosphates, like mono-ammonium phosphate, di-ammonium phosphate and ammonium polyphosphate, ammonium sulfate, ammonium thiosulfate, and the like. It is understood that a fertilizer composition can comprise one or a combination of the fertilizers described herein.

Preferred nitrogenous fertilizers are those containing a nitrogenous compound such as urea, urea-aldehyde oligomers, nitrate salts, ammonium salt, or a mixture thereof, such as ammonium nitrate, ammonium sulfate, ammonium thiosulfate, ammonium polysulfide, ammonium phosphates, ammonium chloride, ammonium bicarbonate, ammonia, calcium nitrate, nitrate soda, calcium cyanamide.

Preferably, the nitrogenous fertilizer comprises urea (often about 1% to about 23% N solutions), or urea and ammonium nitrate (UAN). Suitable urea and ammonium nitrate-containing fertilizers include, for example, UAN 18, UAN 28, UAN 30 and UAN 32, triazone , urea methylene, urea-aldehyde adducts and the like.

Preferred UAN concentrates include UAN 18, UAN 28, UAN 30, UAN 32, and more preferred UAN concentrates are UAN 28 or UAN 32, UAN 32 being most preferred. Preferred urea (often about 2% to about 20% N solutions) and urea adducts include N-sure, an urea-triazone fertilizer and Trisert triazone fertilizers (often about 5% to about 25% N solutions).

In one embodiment of the invention, the urea based fertilizer solution further comprises a sulfur containing fertilizer. Suitable sulfur containing fertilizers include polysulfide, (bi)sulfite and/or thiosulfate salts. Preferred polysulfide salts include calcium polysulfide (sold for instance under the name Soil-Mend™, Sulforix® or Rex Lime Sulfur) more preferred sulfur containing fertilizer salts include (bi)sulfite and thiosulfates. Suitable (bi)sulfite based liquid fertilizer, include K-ROW 23® (potassium sulfite) and ammonium bisulfite. Sulfite components like sodium sulfite have been described as urease inhibitors. The inhibitor is believed to bind to the di-nuclear Ni(II) center of some bacterial urease in a tridentate mode involving bonds between the two Ni(II) ions in the active site and all three oxygen atoms of the inhibitor.

Most preferred thiosulfate salts include Me thiosulfate, wherein Me is ammonium, potassium, calcium, magnesium, manganese, zinc, copper and/or iron. Preferred Me ions include ammonium, potassium, calcium and/or magnesium. In one embodiment, ammonium thiosulfate is used, because of its additional stabilizing effect on urea. Thiosulfate based liquid fertilizers are well known, and comprise for example:
- Ammonium thiosulfate, which is a 50-60% aqueous solution, (grade is 12-0-0-26).
- Potassium thiosulfate (KTS®), which is a 50% aqueous solution, (grade is 0-0-25-17S).
- Calcium thiosulfate (CaTs®), which is a 24-25% aqueous solution, (grade is 0-0-0-10S-6Ca)
- Magnesium thiosulfate, which is a 24-25% solution, (grade is 0-0-0-10S-4Mg)

In one embodiment, a concentrated fertilizer composition is made by combining the inhibitor composition (additive solution) of the present invention with a concentrated nitrogenous fertilizer to form a concentrated liquid nitrification-inhibited fertilizer composition.

In a further embodiment of the invention, a diluted fertilizer composition is prepared by subsequently diluting the concentrated liquid nitrification-inhibited fertilizer composition with an aqueous medium, preferably water in a ratio of up to about 500 pbw, more preferably from about 10 to about 500 pbw and even more preferably from about 100 to about 300 pbw, of the aqueous medium per about 1 pbw concentrated liquid nitrogenous fertilizer composition.

In one embodiment, the end use fertilizer composition of the present invention is made by combining the additive solution(s) (I) of the present invention, a concentrated liquid nitrogenous fertilizer, and an aqueous medium.

In one embodiment, the end use fertilizer composition of the present invention comprises one or more urease inhibitors, preferably NBPT, alone or in combination with one or more nitrification inhibitors.

In one embodiment, the end use fertilizer composition (II) of the present invention comprises from about 0.001 to about 5 pbw, preferably from about 0.01 to about 2 pbw urease inhibitor and/or nitrification inhibitor per about 100 pbw of the one or more nitrogenous fertilizer compounds.

In one embodiment, the end use fertilizer composition is applied to target plants or to an environment for the target plants, i.e., to ground on or within which the target plants are growing or to be grown, at a rate of from about 0.01 pounds to about 5 pounds of the fertilizer composition, preferably from about 0.05 pounds to about 2 pounds of the fertilizer composition, per 1000 square feet of ground.

In one embodiment, the end use fertilizer composition is applied to target plants or to an environment for the target plants at a rate effective to provide a dosage of fertilizer of from about 0.01 pounds to about 5 pounds of fertilizer, preferably from about 0.05 pounds to about 2 pounds of fertilizer, per 1000 square feet of ground.

The composition of the present invention provides improved ease of handling of urease inhibitors and/or nitrification inhibitors, improved solubility characteristics, low toxicity of the water based solution with only a relatively low amount of organic solvents, good storage characteristics, and excellent miscibility with aqueous compositions, such as aqueous nitrogenous fertilizer formulations.

Below are listed some combinations of these products that can be made to reduce ammonia loss and slow down nitrification. The compositions are described as percent by weight on a ton basis.

Additive solutions (I) of the invention and liquid fertilizers (II) of the invention help stimulate plant growth, and reduce ammonia loss and slow down nitrification.

Below are listed some formulations of the current invention. It should be understood that any of the named formulations below are for illustration only and not limited to just these formulations but includes all known formulations that are suitable for obtaining good inhibition of urease and of nitrification. The products listed below are not limited to just these products but includes all liquid fertilizers and suspension fertilizers commonly used in the liquid fertilizer industry that would require the use of NBPT as an urease inhibitor to reduce or minimize ammonia loss or the use of DCD as a nitrification inhibitor to slow or reduce nitrification reaction in the soil.

The tables below describe a number of possible compositions. These compositions can be made by mixing concentrated additive solutions with urea and/or UAN solutions.

For UAN (urea nitrogen containing fertilizers) formulations using this technology nitrogen content can range from about 1% N as UAN1 to about 31.9% N as UAN32, preferably between about 5 and about 31.9% and more preferably between about 16 and about 31.9%. For liquid urea, nitrogen content can range about 1% to about 23%, preferably between about 5% and about 23% and more preferably between about 15 and about 20%. Ranges for liquid phosphate are from about 0.1% to about 33.9% while ranges for potassium are from about 0.1% to about 24.9% using potassium thiosulfate and from about 0.1% to about 22.9% using potassium bi/sulfite. Ranges for NBPT are from about 0.01% to about 5%, for DCD from about 0.1 to about 20% and for Thio-Sul from about 1.0% to about 25.9% sulfur. Other nutrients and micronutrients that can be added include zinc, boron, calcium, iron, copper, molybdenum, manganese, and magnesium.

Examples of potential blends with UAN32, NBPT, Ammonium thiosulfate (ATS) and DCD:

| UAN32, ATS, NBPT and DCD Blends | UAN32 | Thio-Sul® | Water | NBPT | DCD | |
|---|---|---|---|---|---|---|
| 31-0-0 + 0.09% DCD | 1922.5 | | 70.3 | | 7.2 | Pref |
| 28-0-0-5 S + 0.09% DCD | 1591 | 384.5 | 16.8 | | 7.2 | Pref |
| 27-0-0-5 S + 0.5 NBPT + 0.09 DCD | 1529 | 385 | 28.8 | 50.0 | 7.2 | Pref |
| 20-0-0-5 S + 0.2 NBPT + 0.5 DCD | 1085 | 385 | 470 | 20 | 40 | |
| 27-0-0-5 S + 0.1 NBPT + 0.2 DCD | 1535 | 385 | 54 | 10 | 16 | Most Pref |
| 26-0-0-5 S + 0.1 NBPT + 0.4 DCD | 1464 | 385 | 109 | 10 | 32 | Most Pref |

Examples of UAN32, Potassium thiosulfate (KTS), Ammonium polyphosphate (APP), NBPT and DCD:

| Liquid UAN32, KTS®, NBPT and DCD Blends | UAN32 | APP 10-34-0 | KTS® | Water | NBPT | DCD | |
|---|---|---|---|---|---|---|---|
| 12-0-7.4-5 S + 0.2 DCD | 742 | | 588 | 654 | | 16 | |
| 12-0-7.4-5 S + 0.06 NBPT + 0.25 DCD | 739 | | 588 | 645 | 6.0 | 20 | Most Pref |
| 12-0-7.4-5 S + 1.0 NBPT | 750 | | 588 | 562 | 100 | | Pref |
| 18-5-3-2 S + 0.4 DCD | 1132 | 294 | 240 | 433 | | 8.0 | Pref |
| 8-8-8-5 S + 0.1 DCD | 349 | 471 | 640 | 532 | | 8.0 | |
| 8-8-8-5 S + 0.09 NBPT + 0.1 DCD | 349 | 471 | 640 | 523 | 9.0 | 8.0 | Pref |

Examples of UAN32, Calcium thiosulfate (CaTs®), NBPT and DCD:

| Liquid UAN32, CaTs®, NBPT and DCD | UAN32 | CaTs® | Water | NBPT | DCD | |
|---|---|---|---|---|---|---|
| 15-0-0-5 S + 3.0 Ca + 0.08 NBPT | 937.5 | 1000 | 54 | 8.0 | 0 | |
| 15-0-0-5 S + 3.0 Ca + 0.08 NBPT + 0.3 DCD | 925 | 1000 | 43 | 8.0 | 24.0 | Pref |
| 20-0-0-3.3 S + 2.0 Ca + 0.2 NBPT | 1250 | 667 | 63.3 | 20 | 0 | Pref |
| 20-0-0-3.3 S + 2.0 Ca + 0.08 NBPT + 0.3 DCD | 1250 | 667 | 51 | 8.0 | 24.0 | Pref |
| 25-0-0-2.0 S + 1.2 Ca + 0.08 NBPT | 1562.5 | 400 | 29.5 | 8.0 | 0 | Most Pref |
| 25-0-0-2 S + 1.2 Ca + 0.06 NBPT + 0.25 DCD | 1552 | 400 | 40 | 6.0 | 20.0 | Most Pref |

Examples of UAN32, Magnesium thiosulfate (MagThio®), NBPT and DCD:

| Liquid UAN32, MagThio®, NBPT and DCD | UAN32 | MagThio® | Water | NBPT | DCD | |
|---|---|---|---|---|---|---|
| 15-0-0-5 S + 2.0 Mg + 0.08 NBPT | 937.5 | 1000 | 54.5 | 8.0 | 0 | Pref |
| 15-0-0-5 S + 2.0 Mg + 0.08 NBPT + 0.3 DCD | 925 | 1000 | 43.0 | 8.0 | 24.0 | Pref |
| 5-0-0-7.5 S + 3.0 Mg + 0.08 NBPT | 312.5 | 1500 | 179.5 | 8.0 | 0 | |
| 15-0-0-5.0 S + 2.0 Mg + 0.06 NBPT + 0.25 DCD | 927 | 1000 | 47 | 6.0 | 20.0 | Most Pref |
| 22-0-0-2.5 S + 1.0 Mg + 0.08 NBPT | 1375 | 500 | 117 | 8.0 | 0 | Most pref |
| 22-0-0-2.5S + 1.0 Mg + 0.1 NBPT + 0.25 DCD | 1364 | 500 | 106 | 10 | 20 | Most Pref |

Examples of UAN32, Ammonium polyphosphate (APP), K-Row 23®, NBPT and DCD:

| Liquid UAN32, MagThio®, NBPT and DCD | UAN32 | APP 10-34-0 | K-Row 23® | Water | NBPT | DCD | |
|---|---|---|---|---|---|---|---|
| 10 - 2.5 - 8.6 + 3S + 0.08 NBPT | 578 | 147 | 748 | 519 | 8.0 | | |
| 20-2.5-3.0 +1.0S + 0.08 NBPT | 1203 | 147 | 261 | 381 | 8.0 | | Pref |
| 20-2.5-3.0 +1.0S + 0.08 NBPT + 0.25 DCD | 1192.5 | 147 | 261 | 371.5 | 8.0 | 20.0 | Pref |
| 18-0-5 + 1.7S + 0.06 NBPT + 0.25 DCD | 1114 | | 435 | 425 | 6.0 | 20.0 | M Pref |
| 15-5-4+1.4 S + 0.08 NBPT | 847 | 294 | 348 | 502 | 8.0 | 0 | |
| 5-0-15 + S + 0.1 NBPT + 0.25 DCD | 302 | | 1305 | 363 | 10 | 20 | |

Preferred compositions are relatively high strength compositions, and particularly preferred are high strength compositions with a relatively high amount of sulfur.

The invention will be elucidated with the following examples, without being limited thereto.

### EXAMPLES

### Examples 1-8

Urea is dissolved in the same amount of water by stirring. Thereafter - if applicable - the co-solvent is mixed, and thereafter the urease and/or nitrification inhibitor. The amounts are given in the Table below.

| | Ex 1-R | Ex 2-R | Ex 3 | Ex 4 | Ex 5 | Ex 6 | Ex 7 | Ex 8 |
|---|---|---|---|---|---|---|---|---|
| Strength: (wt%) | 10% NBPT | 4% DCD | 20% NBPT | 25% NBPT | 30% NBPT | 16% DCD | 25% DCD | 10% NBPT 15% DCD |
| Compounds (In grams) | | | | | | | | |
| Water | 5 | 49 | 200 | 200 | 20* | 30 | 5 | 33 |
| Urea | 5 | 49 | 200 | 200 | 20 | 30 | | 33 |
| N-Sure®* | | | | | 20* | | 40* | |
| Ethanol | | | 200 | 200 | 20 | 30 | | |
| DMSO | | | | | | | 20 | 34 |
| NBPT | 1.1 | | 150 | 200 | 35 | | | 14 |
| DCD | | 4 | | | | 17.2 | 22 | 20 |
| Solvent ** | 0 | 0 | 33% | 33% | 25% | 33% | 31% | 34% |
| Solvent *** | 0 | 0 | 27% | 25% | 19% | 28% | 23% | 25% |

| | | | | | | | | |
|---|---|---|---|---|---|---|---|---|
| *N-Sure® (an urea-triazone fertilizer) contains about 8% water; hence, of the 20 wt% about 1.6 wt% is water. **Strength (wt% on the total weight of a+b+c) ***Strength (wt% on the total of the additive solution I) | | | | | | | | |

The resulting solutions are clear to the eye. The solutions are storage stable at temperatures between about 15 °C and about 40 °C. The solution can be used to add a required amount of NBPT and/or DCD to a liquid fertilizer as wanted.

### Example 9

To prepare a liquid fertilizer with the composition 20-0-0-3 S plus NBPT and DCD (from urea and ammonium thiosulfate), 197.6 grams urea, 52.4 grams ammonium thiosulfate, 199.46 grams water, 0.99 grams NBPT, 3.95 grams DCD were mixed and stirred to dissolve.

### Example 10

As an alternative to Example 9, a stock solution of 10 kg urea and 10 L of water 10 kg of ethanol with 5 kg DCD and 1.25 kg NBPT was prepared by stirring first water and urea, adding ethanol and thereafter adding DCD and NBPT and further stirring, till a clear solution was obtained.

A solution of 187.6 kg urea, 52.4 kg ammonium thiosulfate and 189.46 kg water was prepared. To this mixture, the 25 kg of stock solution was added. The resulting solution was clear and storage stable.

### Example 11

In yet another example according to the invention, 30 grams of an urea-triazone fertilizer (N-Sure®, about 8 wt% is water) was mixed with 15 grams of DMSO to form a homogeneous solution. To this, 15 grams of DCD was added and the mixture was heated to 85° C to dissolve the DCD with stirring. The resulting 25% DCD solution (15 grams DCD/60 grams total weight → 25 wt%) was cooled to ambient and packed as such.

### Example 12

In yet another example according to the invention, 100 grams of Ethanol, 100 grams of urea-triazone fertilizer (N-Sure®), 100 grams of 50% urea in water solution and 130 grams of NBPT were mixed and heated to about 45°C until dissolved. The resulting 30% NBPT solution (130 grams NBPT/430 grams total weight → >30 wt%) was cooled to ambient and packaged as such.

## Claims

1. An additive solution (I) of at least one urease inhibitor (d1) and/or at least one nitrification inhibitor (d2), said solution comprising:
- urea (a1) and/or an urea-aldehyde adduct (a2) and/or an urea-triazone fertilizer (a3), water (b), at least one organic co-solvent (c), and further
- at least one urease inhibitor (d1) and/or at least one nitrification inhibitor (d2),
wherein compounds (a) are present in an amount of at least 20 wt%, preferably at least 25 wt%, relative to the total weight of compounds (a)+(b)+(c), and
wherein compounds (d) are present in an amount of from 0.04 to 40 wt%, preferably from 0.1 to 30 wt%, relative to the total weight of the additive solution (I).

2. The additive solution according to claim 1, comprising:
- urea (a1) and/or an urea-triazone fertilizer (a3), water (b), at least one organic co-solvent (c), and further
- at least one urease inhibitor (d1), or a combination of at least one urease inhibitor (d1) and at least one nitrification inhibitor (d2),
wherein the amount of urease inhibitors (d1) is at least 1 wt%, preferably at least 2 wt%, relative to the total weight of the additive solution (I).

3. The additive solution according to claim 1 comprising:
- urea (a1) and/or an urea-triazone fertilizer (a3), water (b), at least one organic co-solvent (c), and further
- at least one nitrification inhibitor (d2), or a combination of at least one nitrification (d2) inhibitor and at least one urease inhibitor (d1),
wherein the amount of nitrification inhibitors (d2) is at least 0.1 wt%, preferably at least 1 wt%, more preferably at least 2 wt%, relative to the total weight of the additive solution (I).

4. The additive solution according to any one of claims 1-3, wherein urease inhibitors (d1) are present in an amount of at least 5 wt%, preferably at least 15 wt%, up to 30 wt% and more, and/or wherein nitrification inhibitors (d2) are present in an amount of at least 5 wt%, preferably at least 15 wt%, up to 30 wt% and more, relative to the total weight of the additive solution (I).

5. The additive solution according to any one of claims 1-4 wherein the urease inhibitor (d1) is a phosphoric triamide type inhibitor, preferably a thiophosphoric triamide type inhibitor.

6. The additive solution according to any one of claims 1-5 wherein the nitrification inhibitor (d2) is dicyandiamide (DCD), ammonium thiosulfate (ATS), thiourea (TU) and/or dimethylpyrazzole phosphate (DMPP), preferably DCD, ATS and/or DMPP.

7. The additive solution according to any one of claims 1-6, wherein the co-solvent is a polar protic and/or a polar non-protic solvent that is miscible with water.

8. A process for preparing an additive solution (I) according to any one of claims 1-7, comprising the step of dissolving at least one urease inhibitor (d1) and/or at least one nitrification inhibitor (d2) in a solution comprising: (a) urea (a1) and/or an urea-aldehyde adduct (a2) and/or an urea-triazone fertilizer (a3), (b) water and at (c) least one organic co-solvent that preferably is selected from polar protic and/or polar non-protic solvents that are miscible with water.

9. A process for preparing a liquid fertilizer (II) having at least one urease inhibitor (d1) and/or at least one nitrification inhibitor (d2), comprising the step of adding to a liquid fertilizer at least one additive solution (I) according to any one of claims 1-7.

10. The process of claim 9, wherein the liquid fertilizer comprises a sulfur containing fertilizer, the sulfur containing fertilizer preferably being chosen from polysulfides, (bi)sulfites and/or from thiosulfate fertilizers.

11. The process according to any one of claims 9-10 wherein urease inhibitors (d1) are present in an amount of from 0.5-10 wt% and/or wherein nitrification inhibitors (d2) are present in an amount of from 1-5 wt%, relative to the total weight of the liquid fertilizer (II).

12. The process according to any one of claims 9-11, wherein both urease inhibitors (d1) and nitrification inhibitors (d2) are present and this in a ratio of from 1:10 to 6:10, preferably from 2:10 to 3:10.

13. A liquid mixed N-S fertilizer composition (III) comprising:
- water,
- a sulfur containing fertilizer, selected for instance from polysulfide, (bi)sulfite and/or thiosulfate fertilizers,
- a nitrogen containing fertilizer, more in particular an urea based nitrogenous fertilizer, and
- at least one urease inhibitor and/or at least one nitrification,
wherein the amount of S is more than 2 wt%, preferably more than 5 wt%, relative to the total weight of the fertilizer (III), and
wherein the amount of N is more than 5 wt%, preferably more than 20 wt%, and more preferably more than 25 wt%, relative to the total weight of the fertilizer (III).

14. The liquid N-S fertilizer of claim 13, wherein the urease inhibitor (d1) is NBPT and wherein the nitrification inhibitor (d2) is DCD.

15. A kit-in-parts containing:
- at least one additive solution (I) according to any one of claims 1-7, optionally containing a dye,
- at least one liquid sulfur containing fertilizer, that preferably is a stock solution of a thiosulfate fertilizer, the liquid sulfur containing fertilizer optionally containing a different dye, and,
- optionally, a sheet or a card with dosage recommendations.
